# EUROPEAN PATENT SPECIFICATION

(11) **EP 2 704 492 B1**
(45) Date of publication and mention of the grant of the patent: **18.05.2016**
(21) Application number: 12777222.6
(22) Date of filing: 23.04.2012
(51) Int. Cl.: H04W 48/16, H04W 36/04, H04W 48/10, H04W 24/08, H04W 36/00, H04W 48/12

(54) **MOBILE COMMUNICATION METHOD AND MOBILE TERMINAL**
MOBILKOMMUNIKATIONSVERFAHREN UND MOBILES ENDGERÄT
PROCÉDÉ DE COMMUNICATION MOBILE ET TERMINAL MOBILE

(30) Priority: 28.04.2011 JP 2011102515
(43) Date of publication of application: 05.03.2014
(73) Proprietor: NTT DOCOMO, INC., Chiyoda-ku Tokyo 100-6150 (JP)
(72) Inventor: TAKAHASHI, Hideaki, Tokyo 100-6150 (JP); ABE, Tetsushi, Tokyo 100-6150 (JP); IWAMURA, Mikio, Tokyo 100-6150 (JP)
(74) Representative: Hoffmann Eitle
(86) International application number: PCT/JP2012/060873
(87) International publication number: WO 2012/147697

(56) References cited:
- LG ELECTRONICS INC: "Measurement restriction for idle mode MUE with femto ABS", 3GPP DRAFT; R2-106578 MEASUREMENT RESTRICTION FOR IDLE MODE MUE WITH FEMTO ABS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115 - 20101119, 9 November 2010 (2010-11-09), XP050605544, [retrieved on 2010-11-09]
- INTEL CORPORATION: "Idle-mode eICIC handling under mixed deployment", 3GPP DRAFT; R2-106637 EICIC IDLE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050492386, [retrieved on 2010-11-09]
- ALCATEL-LUCENT: "Signalling support for Almost Blank Subframe patterns", 3GPP DRAFT; R2-106449, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050492278, [retrieved on 2010-11-09]
- ALCATEL-LUCENT: 'Signalling support for Almost Blank Subframe patterns' 3GPP TSG-RAN WG2 MEETING #72, R2-106449 November 2010, pages 1 - 5, XP050492278
- INTEL CORPORATION: 'Idle-mode eICIC handling under mixed deployment' 3GPP TSG RAN WG2 MEETING #72, R2-106637 November 2010, pages 1 - 4, XP050492386

## Description

### Technical Field

The present invention relates to a mobile communication method and a MOBILE STATION.

### Background Art

It was agreed for "Enhanced Inter Cell Interference Coordination (eICIC)" in Long Term Evolution (LTE) Release 10 that a "Measurement Subframe Pattern" is notified to a MOBILE STATION UE in Connected mode through dedicated Radio Resource Control (RRC) signaling as illustrated in Fig. 6 (see Non-patent Literature 1).

Herein, the "Measurement Subframe Pattern" is the measurement subframe pattern information indicating a subframe used so that the MOBILE STATION UE in Connected mode measures Reference Signal Received Power (RSRP) or Reference Signal Received Quality (RSRQ) in order to monitor the radio link.

On the other hand, it was not agreed for the "eICIC" in LTE Release 10 that a "Measurement Subframe Pattern" is notified to a MOBILE STATION UE in Idle mode.

However, to solve a problem in the following two cases, it is considered that it is necessary to notify the "Measurement Subframe Pattern" to a MOBILE STATION UE in Idle mode.

A first case is that a macro cell (Macro cell) and a pico cell (Pico cell) are located neighboring to each other. A second case is that a macro cell and a Closed Subscriber Group (CSG) cell are located neighboring to each other.

It is defined in LTE Release 10 that a parameter is set in a handover process in order to cause the MOBILE STATION UE in Connected mode to preferentially select a pico cell and a radio resource is time-shared in order to prevent interference such that a "Measurement process" is performed with a part of the time-shared radio resource in the first case.

In LTE Release 10 in that case, a MOBILE STATION UE in Idle mode keeps in camp-on mode of the macro cell even when approaching a pico cell because a "Measurement Subframe Pattern" is not notified to the MOBILE STATION UE in Idle mode. A handover from the macro cell to the pico cell is performed only when a handover parameter set in the wake of a "measurement report" transmitted after the measurement of the quality of the pico cell is used after the mode is switched to Connected mode in the macro cell.

Thus, there is a problem in that an unnecessary handover through the macro cell occurs after the MOBILE STATION UE in Idle mode is switched to in Connected mode in the pico cell.

Further, in the second case, a CSG cell is an interference source for a MOBILE STATION UE that does not have access to the CSG cell.

Thus, there is a problem in that a MOBILE STATION UE in Idle mode that does not have access to such a CSG cell cannot catch a camp-on cell (camp-on cell) due to the interference from the CSG cell and keeps in a state in which a station continues searching a camp-on cell ("Any cell selection") when the MOBILE STATION UE approaches the CSG cell.

In light of the foregoing, a method in which a "Measurement Subframe Pattern" is separately notified to a MOBILE STATION UE using an "RRC Connection Release" when the MOBILE STATION UE is switched from Connected mode to Idle mode is proposed as a method for notifying a "Measurement Subframe Pattern" to such a MOBILE STATION UE in Idle mode (see Non-patent Literature 2).

For example, when it is determined using the "CSG PCI split range" included in System Information Block (SIB) 4 that the MOBILE STATION UE has approached to the CSG cell, a "Measurement process" is performed with applying the "Measurement Subframe Pattern" in such a method.

### Citation List

### Non-patent Literature

Non-patent Literature 1: 3GGP contribution R2-111617
Non-patent Literature 2: 3GGP contribution R2-106578

### Summary of Invention

### Technical Problem

However, there is a problem in the above proposed technique in that the MOBILE STATION UE cannot recognize which "Measurement Subframe Pattern" should be applied when a plurality of "Measurement Subframe Patterns" are set in the network.

In the above proposed technique, there is a further problem in that the MOBILE STATION UE cannot recognize which cell to apply the "Measurement Subframe Pattern" when the MOBILE STATION UE approaches thereto because the MOBILE STATION UE cannot determine the type of a cell based on the PCI in each cell in the first case.

### Solution to Problem

In light of the foregoing, an objective of the present invention is to provide a mobile communication method and a MOBILE STATION that enable a "Measurement process" using a plurality of "Measurement Subframe Patterns".

This object is accomplished by the subject-matter of the independent claims. The dependent claims describe advantageous embodiments.

### Brief Description of Drawings

Fig. 1 is a view of the whole structure of a mobile communication system according to a first embodiment of the present invention.
Fig. 2 is a functional block diagram of a RADIO BASE STATION according to the first embodiment of the present invention.
Fig. 3 is a functional block diagram of a MOBILE STATION according to the first embodiment of the present invention.
Fig. 4 is a view for describing the operation in the mobile communication system according to the first embodiment of the present invention.
Fig. 5 is a sequence diagram of the operation in the mobile communication system according to the first embodiment of the present invention.

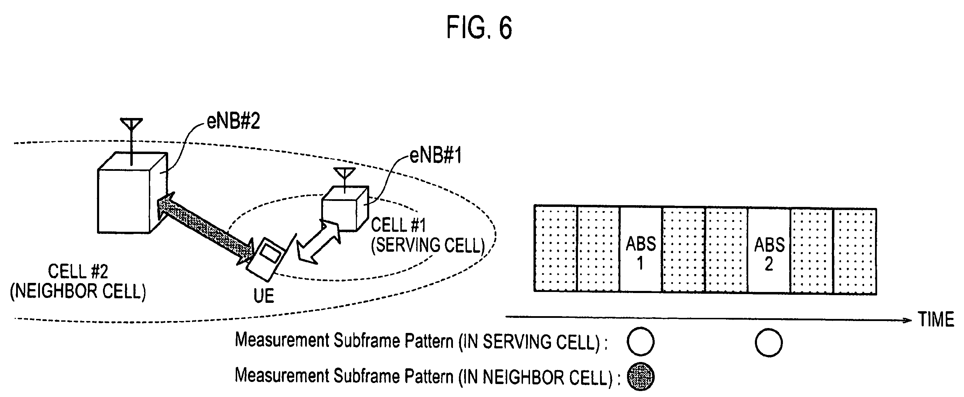

Fig. 6 is a view for a mobile communication system according to a prior art.

### Description of Embodiments

### (Mobile communication system according to the first embodiment of the present invention)

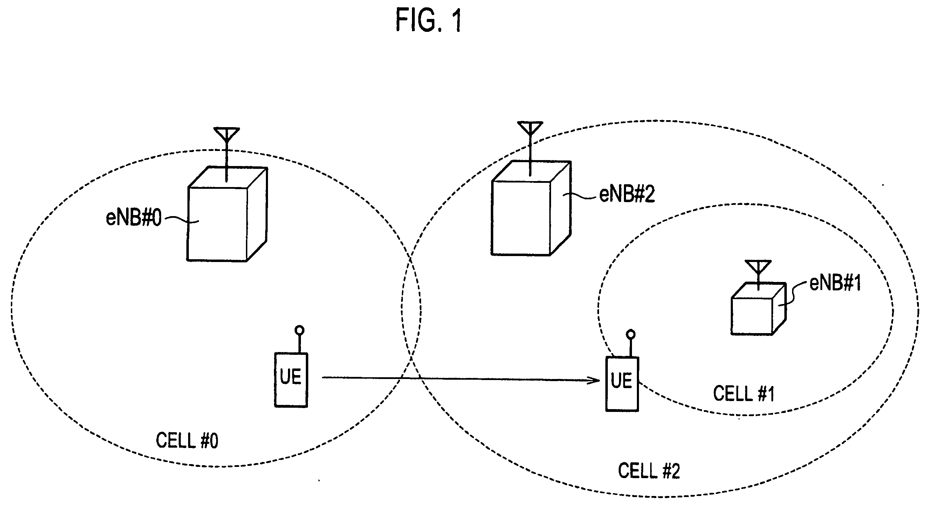

Next, a mobile communication system according to a first embodiment of the present invention will be described with reference to Figs. 1 to 5. Although an LTE mobile communication system is cited and described as an example of the mobile communication system according to the present embodiment, the present invention is applicable to another mobile communication system other than an LTE mobile communication system.

The mobile communication system according to the present embodiment is configured to perform an "eICIC" therein.

As illustrated in Fig. 1, the mobile communication system according to the present embodiment includes a RADIO BASE STATION eNB#0 that manages a cell #0, a RADIO BASE STATION eNB#1 that manages a cell #1, and a RADIO BASE STATION eNB#2 that manages a cell #2.

Here, the cells #0 and #2 can be any of a macro cell, a pico cell, and a CSG cell. Note that the pico cell can also be referred to as a femto (Femto) cell, a micro (Micro) cell, or the like.

The cell #1 is a pico cell or a CSG cell and the cell #2 is a macro cell in the mobile communication system according to the present embodiment.

Further, in the mobile communication system according to the present embodiment, a MOBILE STATION UE is switched from Connected mode to Idle mode in the cell #0 so that the MOBILE STATION UE is in Idle mode in the cell #2.

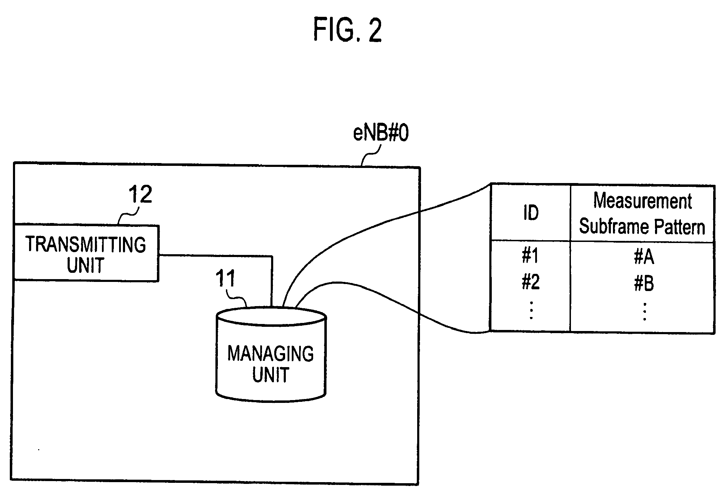

As illustrated in Fig. 2, the RADIO BASE STATION eNB#0 includes a managing unit 11, and a transmitting unit 12.

As illustrated in Fig. 2, the managing unit 11 is configured to store the record for linking an "ID" with a "Measurement Subframe Pattern". In other words, the managing unit 11 is configured to manage a "Measurement Subframe Pattern" corresponding to each ID.

In that case, the "Measurement Subframe Pattern" means measurement subframe pattern information indicating one or a plurality of subframes from among the subframes set as Almost Blank Subframes (ABS) in each cell.

The transmitting unit 12 is configured to notify an ID corresponding to the "Measurement Subframe Pattern" to the MOBILE STATION UE using the "RRC connection Release".

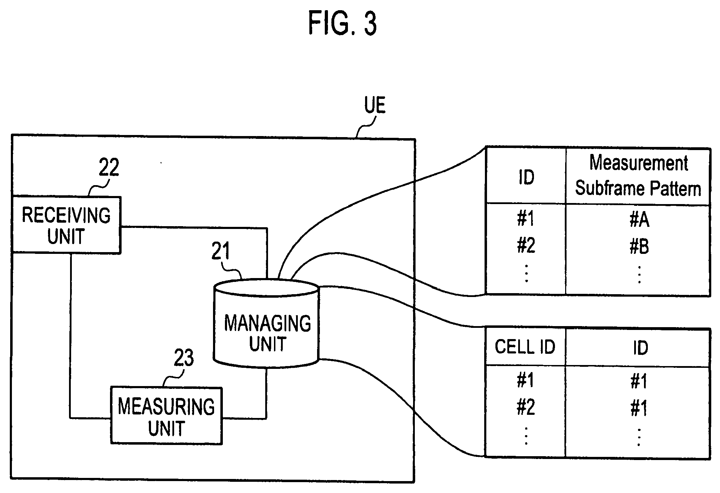

As illustrated in Fig. 3, the MOBILE STATION UE includes a managing unit 21, a receiving unit 22, and a measuring unit 23.

The receiving unit 22 is configured to receive various signals from RADIO BASE STATIONs eNB.

For example, as illustrated in Fig. 1, the receiving unit 22 receives the "RRC Connection Release" from the RADIO BASE STATION eNH#0 and receives broadcast INFORMATION (System Information (SI) ) from the RADIO BASE STATIONs eNB#1 and eNB#2.

As illustrated in Fig. 3, the managing unit 21 is configured to store the record for linking an "ID" with a "Measurement Subframe Pattern".

In other words, the managing unit 21 is configured to manage a "Measurement Subframe Pattern" corresponding to each ID based on the "RRC Connection Release" received with the receiving unit 22.

As illustrated in Fig. 3, the managing unit 21 is further configured to store the record for linking a "cell ID" with an "ID".

In other words, the managing unit 21 is configured to manage the ID transmitted in each cell based on the ID included in the broadcast INFORMATION received with the receiving unit 22.

The measuring unit 23 is configured to perform a "Measurement process" in each cell based on the "Measurement Subframe Pattern" corresponding to the ID transmitted in each cell.

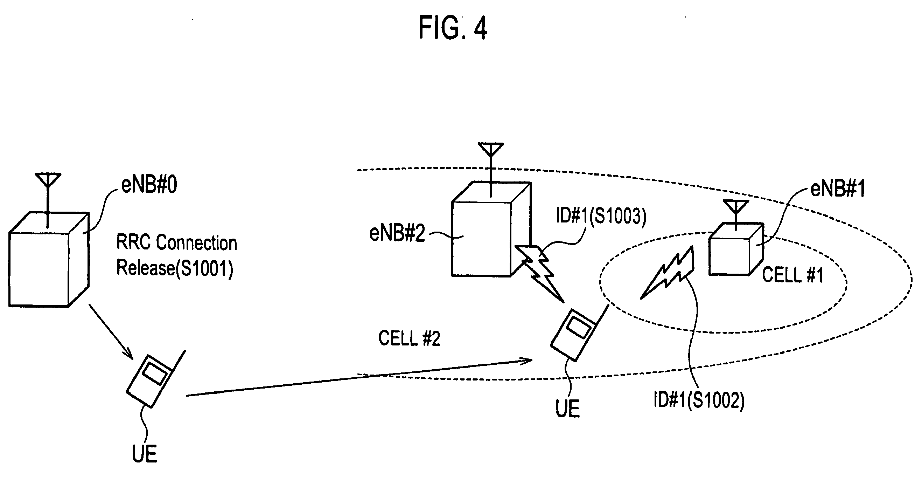

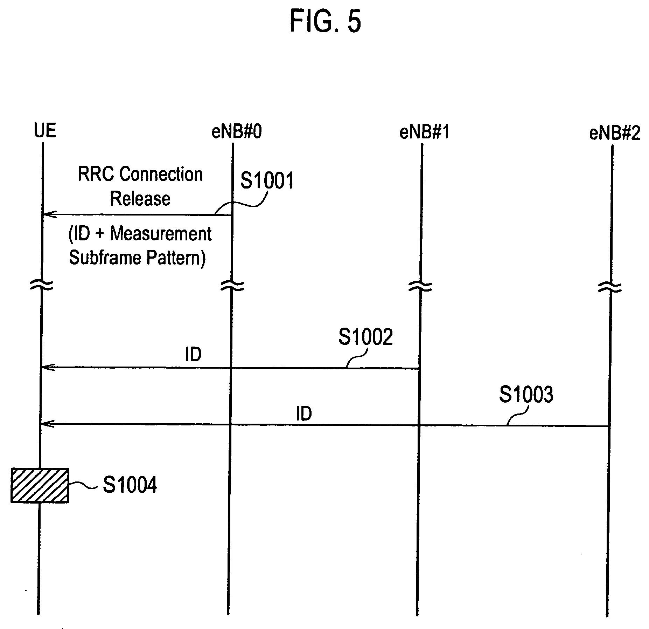

Hereinafter, the operation of the mobile communication system according to the present embodiment will be described with reference to FIGS. 4 and 5.

As illustrated in FIGS. 4 and 5, in step S1001, the RADIO BASE STATION eNB#0 transmits the "RRC Connection Release" to the MOBILE STATION UE that is in Connected mode in the cell #0.

At that time, the RADIO BASE STATION eNB#0 notifies the "Measurement Subframe Pattern" corresponding to each ID to the MOBILE STATION UE using the "RRC Connection Release".

After that, when being in Idle mode in the cell #2, the MOBILE STATION UE obtains an "ID #1" from the broadcast INFORMATION in the cell #1 in step S1002, and obtains an "ID #1" from the broadcast INFORMATION in the cell #2 in step S1003.

In step S1004, the MOBILE STATION UE in Idle mode performs a "Measurement process" based on a "Measurement Subframe Pattern #A" corresponding to the "ID #1" in the cell #1, and performs a "Measurement process" based on a "Measurement Subframe Pattern #A" corresponding to the "ID #1" in the cell #2.

According to the mobile communication system of the present embodiment, the MOBILE STATION UE is configured to perform a "Measurement process" based on the "Measurement Subframe Pattern" corresponding to the ID broadcasted in each cell after obtaining the "Measurement Subframe Pattern" corresponding to each ID using the "RRC Connection Release".

As a result of it, the MOBILE STATION UE can determine a "Measurement Subframe Pattern" to be applied even when a plurality of "Measurement Subframe Patterns" are set in the network.

Further, even in the first case (in other words, the case in which there are both a macro cell and a pico cell), the MOBILE STATION UE can apply the "Measurement Subframe Pattern" corresponding to the ID broadcasted in the cell to which the MOBILE STATION UE has approached.

A further example useful for understanding the invention is a mobile communication method including notifying the ID (identification information) corresponding to a "Measurement Subframe Pattern (measurement subframe pattern information)" indicating a measurement subframe from a MOBILE STATION UE in Idle mode (a camp-on mode) to a MOBILE STATION UE using an "RRC Connection Release (connection release signal)"; receiving ID broadcasted in a neighbor cell (for example, a cell #1 or a cell #2) when the MOBILE STATION UE is in Idle mode; and performing a "Measurement process (measurement process)" based on the "Measurement Subframe Pattern" corresponding to the received ID when the MOBILE STATION UE is in Idle mode.

A further example useful for understanding the invention is a MOBILE STATION UE including a receiving unit 22 configured to receive the ID corresponding to a "Measurement Subframe Pattern" using an "RRC Connection Release" ; and a measuring unit 23 configured to perform a "Measurement process" when the MOBILE STATION UE is in Idle mode. The receiving unit 22 is configured to receive the ID broadcasted in a neighbor cell when the MOBILE STATION UE is in Idle mode, and the measuring unit 23 is configured to perform the "Measurement process" based on the "Measurement Subframe Pattern" corresponding to the received ID.

According to the above examples, the "Measurement Subframe Pattern" can indicate one or a plurality of subframes from among the subframes set as Almost Blank Subframe (ABS) in the neighbor cell.

The above-mentioned operations of the RADIO BASE STATIONs eNB#0/eNB#1/eNB#2 and the MOBILE STATION UE can be implemented with hardware, can be implemented with a software module executed with the processor, or can be implemented with the combination thereof.

The software module can be provided in an arbitrary format storage medium such as a random access memory (RAM), a flash memory, a read only memory (RCM), an erasable programmable RCM (EPRCM), an electrically erasable and programmable RCM (EEPROM), a register, a hard disk, a removal disk, and a CD-ROM.

The storage medium is connected to a processor such that the processor can read and write information from/to the storage medium. The storage medium can be integrated in a processor. The storage medium and the processor can be provided in an ASIC. The ASIC can be provided in the RADIO BASE STATIONS eNB#0/eNB#1/eNB#2 and the MOBILE STATION UE. Each of the storage medium and the processor can be provided in the RADIO BASE STATIONS eNB#0/eNB#1/eNB#2 and the MOBILE STATION UE as a discrete component.

The present invention has been described in detail above with the embodiment. However, it is obvious for a person with an ordinary skill in the art that the present invention is not limited to the embodiment described herein. The scope of the invention is exclusively defined by the the claims. Thus, the description herein is aimed at describing examples and does not mean any limitations on the present invention.

### Industrial Applicability

As described above, the present invention can provide a mobile communication method and a MOBILE STATION that enable a "Measurement process" using a plurality of "Measurement Subframe Patterns".

### Reference Signs List

- eNB#0, eNB#1, eNB#2: RADIO BASE STATION
- UE: MOBILE STATION
- 11, 21: managing unit
- 12: transmitting unit
- 22: receiving unit
- 23: measuring unit

## Claims

1. A mobile communication method comprising:
notifying (S1001) identification information corresponding to measurement subframe pattern information indicating a measurement subframe to be used by a MOBILE STATION in a camp-on mode and the measurement subframe pattern information to the MOBILE STATION using a connection release signal;
receiving (S1002, S1003) by the mobile station identification information broadcasted in a neighbor cell (eNB#1, eNB#2) when the MOBILE STATION is in the camp-on mode; and
performing (S1004) by the mobile station a measurement process based on measurement subframe pattern information corresponding to the received identification information when the MOBILE STATION is in the camp-on mode.

2. The mobile communication method according to claim 1, wherein the measurement subframe pattern information indicates one or a plurality of subframes from among subframes set as Almost Blank Subframes, ABS, in the neighbor cell.

3. A MOBILE STATION, UE, comprising:
a receiving unit (22) configured to receive identification information corresponding to measurement subframe pattern information indicating a measurement subframe to be used by a MOBILE STATION in a camp-on mode and the measurement subframe pattern information using a connection release signal; and
a measuring unit (23) configured to perform a measurement process when the MOBILE STATION is in the camp-on mode, wherein
the receiving unit (23) is configured to receive identification information broadcasted in a neighbor cell when the MOBILE STATION is in the camp-on mode, and
the measuring unit (23) is configured to perform the measurement process based on measurement subframe pattern information corresponding to the received identification information.

4. The MOBILE STATION according to claim 3, wherein the measurement subframe pattern information indicates one or a plurality of subframes from among subframes set as Almost Blank Subframes, ABS, in the neighbor cell.

## Patentansprüche

1. Mobilkommunikationsverfahren, umfassend:
Melden (S1001) einer Identifikationsinformation entsprechend einer Meß-Subrahmen-Musterinformation, die einen Meß-Subrahmen anzeigt, der von einer MOBILSTATION in einem Camp-Modus zu verwenden ist, und der Meß-Subrahmen-Musterinformation an die MOBILSTATION unter Verwendung eines Verbindungsauflösungssignals;
Empfangen (S1002, S1003) einer Identifikationsinformation durch die MOBILSTATION, die in einer Nachbarzelle (eNB#1, eNB#2) per Rundfunk übertragen wird, wenn die MOBILSTATION in dem Camp-Modus ist; und
Durchführen (S1004) eines Meßprozesses durch die MOBILSTATION basierend auf Meß-Subrahmen-Musterinformation entsprechend der empfangenen Identifikationsinformation, wenn die MOBILSTATION in dem Camp-Modus ist.

2. Mobilkommunikationsverfahren nach Anspruch 1, wobei die Meß-Subrahmen-Musterinformation einen oder eine Vielzahl von Subrahmen unter Subrahmen identifiziert, die als fast blanke Subrahmen, ABS, in der Nachbarzelle eingestellt sind.

3. MOBILSTATION, UE, umfassend:
eine Empfangseinheit (22), die eingerichtet ist zum Empfangen einer Identifikationsinformation entsprechend einer Meß-Subrahmen-Musterinformation, die einen Meß-Subrahmen anzeigt, der von einer MOBILSTATION in einem Camp-Modus zu verwenden ist, und der Meß-Subrahmen-Musterinformation unter Verwendung eines Verbindungsauflösungssignals; und
eine Messeinheit (23), die eingerichtet ist zum Durchführen eines Meßprozesses, wenn die MOBILSTATION in dem Camp-Modus ist, wobei
wobei die Empfangseinheit (23) eingerichtet ist zum Empfangen einer Identifikationsinformation, die in einer Nachbarzelle per Rundfunk übertragen wird, wenn die MOBILSTATION in dem Camp-Modus ist, und
die Messeinheit (23) eingerichtet ist zum Durchführen des Meßprozesses basierend auf Meß-Subrahmen-Musterinformation entsprechend der empfangenen Identifikationsinformation.

4. Mobilstation nach Anspruch 3, wobei die Meß-Subrahmen-Musterinformation einen oder eine Vielzahl von Subrahmen unter Subrahmen identifiziert, die als fast blanke Subrahmen, ABS, in der Nachbarzelle eingestellt sind.

## Revendications

1. Procédé de communication mobile comprenant :
la notification (S1001) d'informations d'identification correspondant à des informations de schéma de sous-trame de mesure indiquant une sous-trame de mesure à utiliser par une STATION MOBILE en mode de rappel automatique et aux informations de schéma de sous-trame de mesure à la STATION MOBILE utilisant un signal de libération de connexion ;
la réception (S1002, S1003) par la STATION MOBILE d'informations d'identification diffusées dans une cellule voisine (eNB#1, eNB#2) lorsque la STATION MOBILE est en mode de rappel automatique ; et
la réalisation (S1004) par la STATION MOBILE d'un processus de mesure sur la base d'informations de schéma de sous-trame de mesure correspondant aux informations d'identification reçues lorsque la STATION MOBILE est en mode de rappel automatique .

2. Procédé de communication mobile selon la revendication 1, dans lequel les informations de schéma de sous-trame de mesure indiquent une sous-trame ou une pluralité de sous-trames parmi des sous-trames établies comme sous-trames-quasi blanches ABS dans la cellule voisine.

3. STATION MOBILE UE comprenant :
une unité de réception (22) configurée pour recevoir des informations d'identification correspondant à des informations de schéma de sous-trame de mesure indiquant une sous-trame de mesure à utiliser par une STATION MOBILE en mode de rappel automatique et aux informations de schéma de sous-trame de mesure utilisant un signal de libération de connexion ; et
une unité de mesure (23) configurée pour réaliser un processus de mesure lorsque la STATION MOBILE est en mode de rappel automatique , dans laquelle :
l'unité de réception (23) est configurée pour recevoir des informations d'identification diffusées dans une cellule voisine lorsque la STATION MOBILE est en mode de rappel automatique et
l'unité de mesure (23) est configurée pour réaliser le processus de mesure sur la base d'informations de schéma de sous-trame de mesure correspondant aux informations d'identification reçues.

4. STATION MOBILE selon la revendication 3, dans laquelle les informations de schéma de sous-trame de mesure indiquent une sous-trame ou une pluralité de sous-trames parmi des sous-trames établies comme sous-trames quasi-blanches ABS dans la cellule voisine.
